(19) Europäisches Patentamt
European Patent Office
Office européen des brevets

(11) Veröffentlichungsnummer: **0 208 171 A1**

# (12) EUROPÄISCHE PATENTANMELDUNG

(21) Anmeldenummer: **86108176.8**

(22) Anmeldetag: **14.06.86**

(51) Int. Cl.⁴: **C07C 102/08**, C07C 103/365, B01J 23/88

(30) Priorität: **19.06.85 DE 3521764**

(43) Veröffentlichungstag der Anmeldung: **14.01.87 Patentblatt 87/03**

(84) Benannte Vertragsstaaten: **BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Hoelderich, Wolfgang, Dr.**
**Mannheimer Strasse 18 c**
**D-6710 Frankenthal(DE)**
Erfinder: **Kroener, Michael, Dr.**
**Eislebener Weg 8**
**D-6800 Mannheim 31(DE)**
Erfinder: **Irgang, Matthias, Dr.**
**Andreas-Hofer-Weg 41**
**D-6900 Heidelberg(DE)**
Erfinder: **Widder, Rudi, Dr.**
**In der Taesch 7**
**D-6906 Leimen(DE)**

## (54) Verfahren zur Herstellung von N-Alkenylcarbonsäureamiden.

(57) Verfahren zur Herstellung von N-Alkenylcarbonsäureamiden durch Pyrolyse von Verbindungen der Formel

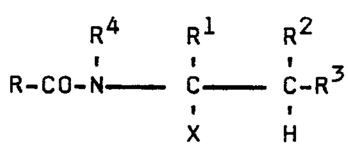

(I),

in der R = H, $C_1$-bis $C_4$-Alkyl,

$R^1$, $R^2$, $R^3$ = H, $C_1$-bis $C_4$-Alkyl, und außerdem

$R^1$ und $R^2$ bzw. $R^2$ und $R^3$ = 5 oder 6 C-Atome gesättigter, carbocyclischer Ring

$R^4$ = H, $C_1$-bis $C_4$-Alkyl und

EP 0 208 171 A1

$$X = -CN,\ -OCH_3,\ -OC_2H_5,\ -OC_3H_7,\ -OC_4H_9,\ -NH-C(=O)H \text{ und } -NH-C(=O)-CH_3$$

bedeutet, in Gegenwart von Katalysatoren, die aus

(a) 30 bis 99 Gew.-% einer Eisenverbindung, berechnet als $Fe_2O_3$,

(b) 1 bis 70 Gew.-% einer Alkali-und/oder Erdalkaliverbindung, berechnet als Alkalimetall-bzw. Erdalkalimetalloxid, und gegebenenfalls

(c) bis zu 60 Gew.-% einer Aluminium-und/oder Chrom-und oder Cer-Verbindung, berechnet als $Al_2O_3$ bzw. $Cr_2O_3$ bzw. $Ce_2O_3$,

(d) bis zu 20 Gew.-% eines Elements zur sechsten Nebengruppe des Periodensystems, berechnet als $MeO_3$, sowie

(e) bis zu 20 Gew.-% einer Verbindung des Vanadins, berechnet als $V_2O_5$ und/oder einer Verbindung des Phosphors, berechnet als $P_2O_5$aufgebaut sind.

## Verfahren zur Herstellung von N-Alkenylcarbonsäureamiden

Aus der US-PS 3 424 791 ist die Herstellung von N-Alkenylcarbonsäureamiden durch Pyrolyse von N-Acylderivaten von 1-Amino-1-cyanethanen und entsprechend substituierter Verbindungen bei Temperaturen von 250 bis 750°C an Feststoffen, wie Glas, Quarz, Eisen, Siliciumcarbid, Aluminiumfluorid, Calciumphosphat oder Aluminiumoxid, bekannt. Die Pyrolyse kann unter vermindertem Druck in Gegenwart von Trägergasen durchgeführt werden. Die Spaltungstemperaturen liegen dabei jedoch relativ hoch, wodurch Ausbeuten und Umsätze Wünsche offen lassen.

Die DE-OS 1 668 038 betrifft ein verbessertes Verfahren zur Herstellung von N-Alkenylcarbonsäureamiden durch Pyrolyse von 1-Amino-1-cyanethanen, das durch die Verwendung katalytisch wirkender Feststoffe gekennzeichnet ist. Man verwendet hierfür als Katalysatoren die unterschiedlichsten Materialien, beispielsweise Marmor, Dolomit, Magnesit, Zinkoxid, Eisenoxide, Holzkohle, Tonscherben sowie Alkali-und Erdalkalioxide auf Tonscherben, Holzkohle oder anderen Trägerstoffen. Mit solchen Katalysatoren erreicht man zwar höhere Ausbeuten als beim Einsatz von Quarz oder Aluminiumoxid, jedoch läßt die Standzeit der Katalysatoren zu wünschen übrig, weil sowohl Ausbeute und Umsatz nach kurzer Betriebsdauer stark abfallen.

Der vorliegenden Erfindung liegt die Aufgabe zugrunde, ein verbessertes Verfahren zur Herstellung von N-Alkenylcarbonsäureamiden durch Pyrolyse von Verbindungen der Formel

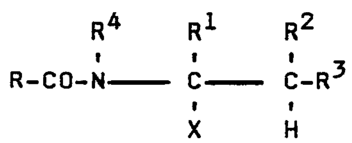 (I),

in der R = H, $C_1$-bis $C_4$-Alkyl,

$R^1$, $R^2$, $R^3$ = H, $C_1$-bis $C_4$-Alkyl, und außerdem

$R^1$ und $R^2$ bzw. $R^2$ und $R^3$ = 5 oder 6 C-Atome gesättigter, carbocyclischer Ring

$R^4$ = H, $C_1$-bis $C_4$-Alkyl und

X = $-CN$, $-OCH_3$, $-OC_2H_5$, $-OC_3H_7$, $-OC_4H_9$, 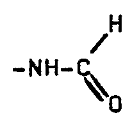 und 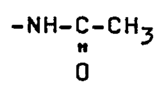

bedeutet, in Gegenwart von Feststoffen als Katalysator, zur Verfügung zu stellen.

Die Aufgabe wird erfindungsgemäß dadurch gelöst, daß der Katalysator aus

(a) 30 bis 99 Gew.-% einer Eisenverbindung, berechnet als $Fe_2O_3$,

(b) 1 bis 70 Gew.-% einer Alkali-und/oder Erdalkaliverbindung, berechnet als Alkalimetall-bzw. Erdalkalimetalloxid, und gegebenenfalls

(c) bis zu 60 Gew.-% einer Aluminium-und/oder Chrom-und/oder Cer-Verbindung, berechnet als $Al_2O_3$ bzw. $Cr_2O_3$ bzw. $Ce_2O_3$,

(d) bis zu 20 Gew.-% eines Elements zur sechsten Nebengruppe des Periodensystems, berechnet als $MeO_3$, sowie

(e) bis zu 20 Gew.-% einer Verbindung des Vanadins, berechnet als $V_2O_5$ und/oder einer Verbindung des Phosphors, berechnet als $P_2O_5$aufgebaut ist.

Bei den erfindungsgemäß zu verwendenden Katalysatoren handelt es sich vorzugsweise um sogenannte Vollkatalysatoren, d.h. der gesamte Katalysator besteht aus der Mischung der katalytisch aktiven Komponenten (a) bis (e). Die Katalysatormasse kann zu den unterschiedlichsten Formkörpern geformt werden, z.B. zu Kugeln, Ringen und Strängen. Vorzugsweise verwendet man einen Vollkatalysator in Wabenform.

Die erfindungsgemäß einzusetzenden Katalysatoren enthalten als Komponente (a) 30 bis 99 Gew.-% einer Eisenverbindung, berechnet als $Fe_2O_3$. Zur Herstellung erfindungsgemäß geeigneter Katalysatoren kann man von verschiedenen Eisenoxiden bzw. Eisenoxidhydraten ausgehen. In Betracht kommen beispielsweise die rotbraunen oder gelben bzw. schwarzen Eisenoxidpigmente bzw. die durch Ausfällung aus wäßrigen Eisensalzlösungen herstellbaren Eisenoxidhydrate.

Als Komponente (b) enthält der Katalysator 1 bis 70 Gew.-% einer Alkaliund/oder Erdalkaliverbindung, berechnet als Alkalimetall-bzw. Erdalkalimetalloxid. Als Komponente (b) der Katalysatormischung kommen vorzugsweise Lithiumverbindungen in Betracht, die im Katalysator bevorzugt in einer Menge von 2 bis 30 Gew.-%, berechnet als Lithiumoxid, vorliegen. Katalysatoren, die eine besonders lange Standzeit aufweisen, enthalten als Komponente (b) eine Mischung aus 55 bis 95 Gew.-% Lithiumoxid und 45 bis 5 Gew.-% Kaliumoxid, zur Herstellung der Katalysatoren setzt man als Komponente (b) entweder die Alkali-oder Erdalkalimetalloxide direkt ein, oder geht von Verbindungen aus, die sich beim Calcinieren zu den entsprechenden Oxiden zersetzen. Beispielsweise verwendet man die Hydroxide, Carbonate, Bicarbonate, Oxalate Salze mit $C_1$-bis $C_3$-Monocarbonsäuren, Borate und Phosphate der Alkali-bzw. Erdalkalimetalle. Zur Herstellung der Katalysatoren kann man auch von den Cyaniden ausgehen bzw. Mischungen von Alkali-und Erdalakaliverbindungen einsetzen.

Aufgrund des Gehalts an Verbindungen der Komponente (b) sind die erfindungsgemäß einzusetzenden Katalysatoren im Gegensatz zu den bekannten Trägerkatalysatoren basisch. Sie können als Komponente (c) bis zu 60 Gew.-% einer Aluminium-und/oder Chromverbindung und/oder Cer-Verbindung, berechnet als $Al_2O_3$ bzw. $Cr_2O_3$ bzw. $Ce_2O_3$ enthalten. Vorzugsweise setzt man die Verbindungen der Komponente (c), sofern sie im Katalysator anwesend sind, in einer Menge von 0,1 bis 20 Gew.-% ein. Diese Komponenten wirken als Strukturstabilisator und verlängern die Standzeit der Katalysatormischung.

Als Komponente (d) zur Herstellung des erfindungsgemäß zu verwendenden Katalysators kann eine Verbindung eines Elements der sechsten Nebengruppe des Periodensystems, berechnet als $MeO_3$, angewendet werden. Sofern die Katalysatoren solche Verbindungen zur Modifizierung enthalten, werden sie vorzugsweise in einer Menge von 0,6 bis 20 Gew.-% eingesetzt. Hierfür eignen sich besonders die Oxide von Molybdän ($MO_3$) und Wolfram ($WO_3$). Zur Herstellung der Katalysatoren geht man bei der Komponente (d) von Verbindungen aus, die die Elemente der sechsten Nebengruppe des Periodensystems in Form der Sauerstoffsäuren bzw. deren Ammoniumsalze oder Kaliumsalze in der Oxidationsstufe +6 enthalten. Unter diesen Verbindungen sind besonders die sogenannten Heteropolysäuren mit Phosphorsäure von Interesse, z.B. die Wolframatophosphorsäure bzw. die Molybdatophosphorsäure.

Anstelle der Komponente (d) oder zusammen mit dieser kann der erfindungsgemäß zu verwendende Katalysator als Komponente (e) bis zu 25 Gew.-%, vorzugsweise 0,5 bis 20 Gew.-%, mindestens einer Verbindung des Vanadins oder des Phosphors, berechnet jeweils als $V_2O_5$ bzw. $P_2O_5$ enthalten. Als Verbindung des Vanadins zur Herstellung der Katalysatoren kommen insbesondere die Oxide, die Ammoniumsalze oder die Kaliumsalze der höchsten Oxidationsstufe des Vanadins in Betracht, z.B. $V_2O_5$, $Na_4VO_3$ bzw. $KVO_3$. Falls sowohl eine Verbindung des Vanadins als auch des Phosphors verwendet wird, werden bevorzugt die Heteropolysäuren des Vanadins mit Phosphorsäure, z.B. die Vanatophosphorsäure oder die entsprechenden Ammonium-oder Kaliumsalze eingesetzt. Sofern man von den Kaliumsalzen der Heteropolysäuren ausgeht, ist der hier mit eingebrachte Gehalt an Kalium bei der Berücksichtigung des Gesamtgehalt an Alkali des Katalysators - (Komponente (b)) zu berücksichtigen. Falls Phosphor allein verwendet wird, geschieht dies in Form des Oxids, der Säure bzw. der Ammonium-oder der Kaliumsalze. Auch hier ist bei Anwendung der Kaliumsalze der Gehalt an Kalium, der in den Katalysator eingebracht wird, bei der Komponente (b) mit zu berücksichtigen.

Der erfindungsgemäß zu verwendende Katalysator kann ggf. weitere Zusätze zur Modifizierung enthalten, z.B. Elemente der achten Nebengruppe wie Cobalt und Nickel, Elemente der ersten Nebengruppe, wie Kupfer und Silber, Elemente der zweiten Nebengruppe, wie Zink und Cadmium, Elemente der vierten Nebengruppe wie Titan und Zirkon, Elemente der siebten Nebengruppe, wie Mangan, seltene Erdmetalle wie Lanthan, Cer, Praseodym und Neodym, außerdem Thorium und Uran sowie Blei und Wismut.

Die erfindungsgemäß zu verwendenden Katalysatoren werden hergestellt, indem man die oben unter (a) und (b) sowie gegebenenfalls (c) bis (e) und ebenfalls wahlweise weitere Zusätze mischt und verformt. Das Mischen der Komponente (a) bis (e) wird in der Regel unter Zusatz von Wasser sowie ggf. unter Zusatz von Extrudierhilfsmitteln, wie Stärke, Methylcellulose oder Graphit vorgenommen. Die Komponenten werden gut durchmischt und vorzugsweise geknetet. Im Anschluß daran wird die homogene Mischung verformt, vorzugsweise extrudiert. Während des Knetens und Extrudierens wird die Mischung nicht über Temperaturen von 130°C erhitzt. Die bei der Extrusion erhaltenen Formlinge werden zunächst bei Temperaturen im Bereich von 80 bis 200°C getrocknet und danach bei Temperaturen im Bereich von 500 bis 1000°C calciniert.

Durch den Calcinierungsprozeß erreichen die Formlinge eine ausreichende Härte. Zur Verbesserung der Porosität können, wie vorstehend bereits angedeutet, Extrudierhilfsmittel bzw. die Porosität verbessernde Mittel bei der Herstellung des Katalysators verwendet werden. Die Formlinge sollen möglichst so gestaltet werden, daß die Porennutzung nahezu 100 % beträgt. Besonders bevorzugt sind Strangpreßlinge, Strangpreßlinge in Form von zylindrischen Ringen, sternförmige und wagenradförmige Strangpreßlinge sowie vor allem wabenförmige Katalysatorkörper. Die wabenförmigen Körper können verschiedene Formen aufweisen. Beispielsweise kann die Grundfläche kreisförmig, oval oder polygonal sein. Die Länge der Wabenkörper kann ein Vielfaches des Querschnitts erreichen. Die Körper sind von einer Vielzahl parallel oder schräg zur zentralen Achse verlaufender Kanäle durchzogen, deren Grundfläche ebenfalls kreisförmig, oval, geschwungen oder eckig sein kann. Um mit diesen wabenförmigen Katalysatorkörpern einen niedrigen Druckverlust während des Betriebs zu erreichen, ist der freie Querschnitt der Anströmfläche, der über 40 % erreichen soll, entscheidend. Die Festigkeit der Katalysatormasse ist eine entscheidende Größe für den freien Querschnitt des Wabenkörpers. Die äußeren Dimensionen der Formkörper erreichen üblicherweise bis zu 150 mm Kantenlänge der Grundfläche bei Quadern und etwa gleichem Durchmesser der Grundfläche bei Zylindern. Die Länge der Körper über den Grundflächen kann über 1000 mm liegen. Die lichte Weite der inneren Kanäle variiert zwischen 0,5 und 20 mm. Die Stärke der inneren Trennwände der Wabenkörper liegt üblicherweise zwischen 0,1 und 5 mm.

Die oben beschriebenen Katalysatoren werden bei der Pyrolyse von Verbindungen der Formel

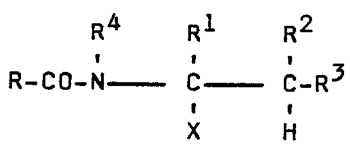 (I),

in der R = H, $C_1$-bis $C_4$-Alkyl,

$R^1$, $R^2$, $R^3$ = H, $C_1$-bis $C_4$-Alkyl, und außerdem

$R^1$ und $R^2$ bzw. $R^2$ und $R^3$ = 5 oder 6 C-Atome gesättiger, carbocyclischer Ring,

$R^4$ = H, $C_1$-bis $C_4$-Alkyl und

X = $-CN$, $-OCH_3$, $-OC_2H_5$, $-OC_3H_7$, $-OC_4H_9$, 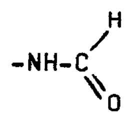,

und 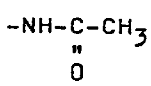

bedeutet, verwendet.

Verbindungen der Formel I, in der der Substituent X eine CN-Gruppe bedeutet, sind aus der US-PS 3 424 791 und der DE-OS 1 668 038 bekannt. Aus diesen Verbindungen wird unter den Bedingungen der Pyrolyse Cyanwasserstoff abgespalten, wobei man dann aus den Verbindungen der Formel I N-Alkenylcarbonsäureamide der Formel

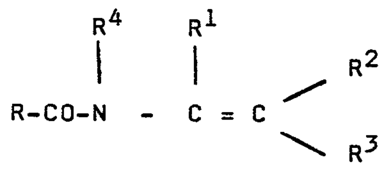

(IV),

in der R, $R^1$, $R^2$, $R^3$ und $R^4$ die in Formel I angegebene Bedeutung haben, erhält. Wenn die Substituenten $R^1$, $R^2$ und $R^3$ in Formel IV für H stehen, werden diese Verbindungen als N-Vinylcarbonsäureamide bezeichnet.

So entsteht beispielsweise aus Formylalaninnitril (H-CO-NH- 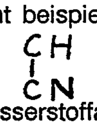 -$CH_3$) durch Cyanwasserstoffabspaltung N-Vinylformamid (H-CO-NH-CH = $CH_2$) und -ebenfalls unter Abspaltung von Cyanwasserstoff -aus der Verbindung der Formel

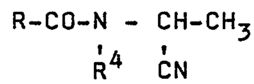

(V),

wenn R = H und $R^4$ = $CH_3$ ist, N-Vinylmethylformamid und wenn in Formel V R = $R^4$ = $CH_3$ ist, N-Vinyl-N-methylacetamid.

Die N-Vinylverbindungen bzw. die N-Alkenylverbindungen (wenn einer der Substituententen $R^1$, $R^2$ bzw. $R^3$ eine Alkylgruppe bedeutet) sind Monomere, aus denen Homo-oder Copolymerisate für die verschiedensten Anwendungsgebiete hergestellt werden können.

Der Substituent X in Formel I kann auch eine Ethergruppierung mit 1 bis 4 Kohlenstoffatomen bedeuten. Verbindungen dieser Art werden z.B. durch Umsetzung von α-Chlorethylmethylether mit Formamid, wie sie in der US-PS 4 334 097 beschrieben ist, oder durch anodische Alkoxylierung von N-ethylcarbonsäureamiden, wie sie aus der EP-PS 19225 bekannt ist, hergestellt.

Auch diese Verbindungen können an den erfindungsgemäß zu verwendenden Katalysatoren pyrolisiert werden, wobei unter Bildung einer Doppelbindung Alkohol eliminiert wird, z.B. erhält man durch Pyrolyse der Verbindung der Formel

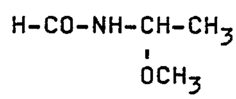

(VI)

unter Abspaltung von Methanol N-Vinylformamid.

Der Substituent X in Formel I kann außerdem folgende Bedeutungen haben:

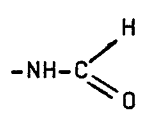 und 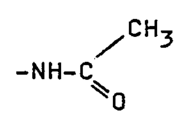.

Verbindungen dieser Art erhält man beispielsweise durch Kondensation von 1 Mol Acetaldehyd mit 2 Mol Formamid gemäß folgender Gleichung

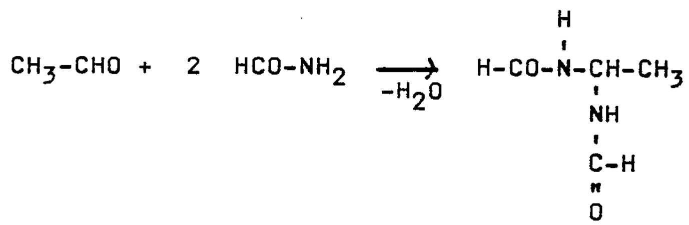

oder durch Kondensation von Acetaldehyd mit Acetamid, wie es in der US-PS 40 18 826 beschrieben ist.

Bei den zuletzt genannten Verbindungen erfolgt die Bildung der N-Vinylcarbonsäureamide durch Abspaltung von Formamid bzw. Acetamid. Beispielsweise entsteht bei der Pyrolyse von Ethyliden-bis-formamid N-Vinylformamid und Formamid.

Die Pyrolyse wird bei Temperaturen von 250 bis 650°C, vorzugsweise 300 bis 550°C durchgeführt. Die Pyrolyse kann bei Normaldruck, oder vorzugsweise unter vermindertem Druck, z.B. in dem Bereich von 5 bis 500, vorzugsweise 10 bis 200 mbar durchgeführt werden. Um die Verbindungen der Formel I zu pyrolisieren, müssen sie zunächst verdampft werden. Die Dämpfe werden dann über den erhitzten Katalysator geleitet, an dem die Eliminierung von HX mit der Bedeutung von X gemäß Formel I erfolgt. Im Anschluß an die Pyrolyse werden die Pyrolyseprodukte kondensiert und in einer weiteren Verfahrensstufe gereinigt. Sofern der Substituent X in Formel I die Bedeutung CN hat, kühlt man die Reaktionsprodukte auf eine Temperatur von 200 bis -10°, vorzugsweise 60 bis -10°C ab, um zunächst alle diejenigen Produkte zu kondensieren, die höher als Cyanwasserstoff sieden. Cyanwasserstoff wird lediglich in dem Maße aus dem Pyrolysegas entfernt, wie es der Löslichkeit des Cyanwasserstoffs in den kondensierten Produkten entspricht. Der nichtkondensierte Cyanwasserstoff wird dann, -ebenfalls unter vermindertem Druck, bei dem auch die Pyrolyse durchgeführt wird -einer Chemiesorption unterworfen. Gegenüber der Pyrolyse tritt lediglich ein durch die Verfahrensführung bedingter Druckverlust auf. Der Druck in der Chemiesorptionszone liegt dann ebenfalls in dem Bereich von 5 bis 200, vorzugsweise 5 bis 150 mbar. Zur Chemiesorption des Cyanwasserstoffs kann man Basen verwenden, z.B. Natronlauge oder Kalilauge, bzw. Aldehyde mit 1 bis 8 Kohlenstoffatomen, wie Formaldehyd, Acetaldehyd, Propionaldehyd, Isobutyraldehyd, n-Butyraldehyd und 2-Ethylhexanal. Als Carbonylverbindungen eigenen sich auch Ketone, wie Aceton oder Methylethylketon. Die Chemisorption des Cycanwasserstoffs mit Carbonylverbindungen erfolgt bei pH-Werten von 7 oder darüber, vorzugsweise im alkalischen pH-Bereich. Hierbei findet die Anlagerung des Cyanwasserstoffs an die Carbonylverbindung mit ausreichender Geschwindigkeit statt. Die so hergestellten Anlagerungsverbindungen von Cyanwasserstoff an Carbonylverbindungen werden mit Formamid zu Verbindungen umgesetzt, die dann zur Pyrolyse eingesetzt werden. Bei der Pyrolyse ist es außerdem von Vorteil, ein Trägergas ($N_2$, $CO_2$, $O_2$, Co) oder ein Verdünnungsmedium wie Formamid zu verwenden.

Bei Einsatz der wabenförmigen Katalysatoren wird so verfahren, daß die Rohrgeometrie den Wabenkörpern angepaßt wird oder umgekehrt. Die Wabenkörper werden in dem Reaktor übereinandergesetzt. Die Durchmesser der Wabenkörpergrundflächen sollen dabei infolge des notwendigen Wärmeaustausches mit dem Heizmedium auf der Reaktoraußenseite nicht zu groß gewählt werden (= 100 mm).

Die vergleichbar geringe Wärmeleitfähigkeit der oxidischen Massen kann durch Verwendung von mit Aktivmasse beschichteten Metallwabenkörpern oder durch Freiräume zwischen den Wabenkörperelementen (Mischenstrecken) angehoben werden. Eine besondere Ausführungsform besteht darin, daß man zwischen einzelne Wabenkörperelemente mit parallel verlaufenden Kanälen statische Mischelemente, die aus keramischem und/oder metallischem Inertmaterial bestehen, einsetzt, um einen nötigen Stoff-und Wärmeaustausch senkrecht zum Produktstrom herbeizuführen. Entscheidend dabei ist, daß über die Längenabmessung des Wabenkörpers dem notwendigen Wärmetransport Rechnung getragen werden kann, d.h. mit zunehmender Wärmetönung der Reaktion müssen kürzere Wabenkörper und mehr statische Mischer eingebaut werden.

Eine weitere besondere Ausführungsform besteht darin, daß die Mischzone selbst, d.h. die Länge der statischen Mischer mit ihren schräg zur zentralen Achse verlaufenden Kanäle so gewählt wird, daß ein vollständiger Stoffaustausch und damit Wärmeaustausch über den Reaktorquerschnitt erfolgt. Hierdurch werden die vor der Mischzone an der Reaktorwand strömende Gase exakt in das Innere des nachfolgenden Wabenkörpers gelenkt und die entlang der Reaktorachse strömenden Gase nach Außen an die

Reaktorwand geleitet. Derartige statische Mischer, die den Gasstrom ablenken, sind im Handel erhältlich. Anstelle dieser Ausführungsform können Wabenkörper aus Katalysatorvollmaterial - (Vollkatalysator) in Form statischer Mischer mit - schräg zur zentralen Achse verlaufenden Kanäle eingesetzt werden.

Die erfindungsgemäß einzusetzenden Katalysatoren ergeben hohe Ausbeuten an N-Alkenylcarbonsäureamiden bei hohen Umsätzen und haben längere Standzeiten als die nach DE-OS 16 80 038 hergestellten Katalysatoren. Die Katalysatoren können nach längerer Betriebsdauer regeneriert werden, indem man sie bei Temperaturen von 250 bis 600°C mit einem Luft-bzw. Sauerstoffstrom behandelt. Die nach dem erfindungsgemäßen Verfahren hergestellten Monomeren zeichnen sich durch eine hohe Reinheit aus, so daß daraus Polymerisate mit besonders hohem Molekulargewicht hergestellt werden können.

Die in den folgenden Beispielen angegeben Teile sind Gewichtsteile, die Angaben in % beziehen sich, sofern nicht anders angegeben, auf das Gewicht der Stoffe.

Herstellung der Katalysatoren

Katalysator A

Dieser Katalysator wurde gemäß der Lehre der DE-OS 1 668 038 hergestellt. Es handelte sich hierbei um Calciumoxid auf α-Aluminiumoxid - (hergestellt durch Tränken des Aluminiumoxids mit Calciumacetat, Calcinieren bei 520°C). Der Katalysator lag in Form von Ringen der Dimension 16 × 16 × 8 mm vor.

Katalysator B

5 250 g α-FeOOH (Eisengelb), 48,3 g $V_2O_5$, 81 g AlOOH, 142 g $WO_3$, 60 g $Li_2CO_3$ werden gut miteinander gemischt. Danach wird dieses Gemenge mit 545 g KOH gelöst in 950 g $H_2O$ angemaischt und im Kneter 3 h verdichtet. Die plastische Masse wird zu ringförmigen Strängen extrudiert, die dann zu Ringen der Dimension 16 × 16 × 8 mm zerteilt werden. Die Ringe werden bei 150°Cb2 h getrocknet und bei 900°Cb1 h calciniert.

Der Katalysator enthält 86,43 Gew.-% $Fe_2O_3$, 8,39 Gew.-% $K_2O$, 1,26 Gew.-% $Al_2O_3$, 2,6 Gew.-% $WO_3$, 0,88 Gew.-% $V_2O_5$ und 0,44 Gew.-% $Li_2O$.

Katalysator C

3000 g α-FeOOH (Eisengelb), 78 g $CrO_3$, 27,6 g $V_2O_5$, 81 g $WO_3$, 34,5 g $Li_2CO_3$ werden gut miteinander gemischt. Danach wird dieses Gemenge mit 329 g KOH, 168 g Kartoffelstärke und 28 g Methylcellulose gelöst in 1 l Wasser angemaischt und im Kneter 1 h verdichtet. Die plastische Masse wird zu Wabenkörpern extrudiert. Die quadratische Grundfläche des erhaltenen quaderförmigen Körpers hat 5 cm Kantenlänge.

Die Länge des Quaders selbst beträgt 12 cm. Die 36 inneren Kanäle haben eine quadratische Stirnfläche mit 6 mm lichter Kantenlänge. Die Stärke der inneren Trennwände weist 1,5 mm auf. Dieser Wabenkörper wird 3 Tage bei Raumtemperatur getrocknet und während 2 h bei ansteigender Temperatur bis 150°C/4 h getrocknet. Anschließend wird der Formkörper 1 h bei 500°C und mit ansteigender Temperatur bis 850°C/1 h calciniert.

Der Katalysator setzt sich zusammen aus 85,47 Gew.-% $FeO_3$, 8,76 Gew.-% $K_2O$, 1,88 Gew.-% $Cr_2O_3$, 2,57 Gew.-r $WO_3$, 0,44 Gew.-% $Li_2O$ und 0,88 Gew.-% $V_2O_5$.

Katalysator D

1700 g α-FeOOH (Eisengelb), 44,2 g $CrO_3$, 15,6 g $V_2O_5$, 46 g $WO_3$ und 311 g LiOH werden 30 min innig durchgemischt. Danach wird dieses Gemenge mit 650 ml $H_2O$ ca. 3 h im Kneter verdichtet. Die plastische Masse wird zu Ringen 16 × 16 × 8 weiterverarbeitet. Die Ringe werden bei 150°C/2 h getrocknet und bei 850°C/30 min calciniert.

Katalysator D enthält 84,08 Gew.-% $FeO_3$, 1,85 Gew.-% $Cr_2O_3$, 0,86 Gew.-% $V_2O_5$, 2,53 Gew.-% WO3 und 10,68 Gew.-% $Li_2O$.

Katalysator E

1700 g α-FeOOH (Eisengelb), 26,2 g AlOOH, 197,2 g $V_2O_5$, 45,9 g $WO_3$ und 103,6 g LiOH werden innig durchmischt. Dieses Gemenge wird zusammen mit 59,5 g KOH und 380 g $H_2O$ ca. 3 h im Kneter verdichtet. Die plastische Masse wird zu Ringen 16 × 16 × 8 weiterverarbeitet. Die Ringe werden bei 150°Cb2 h getrocknet und bei 850°Cb30 min calciniert.

Der Katalysator enthält 80,07 Gew.-% $Fe_2O_3$, 10,34 Gew.-% $V_2O_5$, 2,39 Gew.-% $Li_2O$, 1,17 Gew.-% $Al_2O_3$, 2,62 Gew.-% $K_2O$ und 2,41 Gew.-% $WO_3$.

Katalysator F

1500 g α-FeOOH (Eisengelb), 23,1 g AlOOH, 348 g $V_2O_5$, 40,5 g $WO_3$ und 17,3 g $Li_2CO_3$ werden innig gemischt. Dieses Gemenge wird zusammen mit 217 g KOH und 490 g $H_2O$ ca. 3 h im Kneter verdichtet. Die plastische Masse wird zu Ringen 16 x 16 x 8 weiterverarbeitet. Die Ringe werden bei 150°C/2 h getrocknet und 850°C/30 min calciniert.

Der Katalysator enthält 69,3 Gew.-% $Fe_2O_3$, 1,01 Gew.-% $Al_2O_3$, 17,89 Gew.-% $V_2O_5$, 2,08 Gew.-% $WO_3$, 0,36 Gew.-% LiO und 9,36 Gew.-% $K_2O$.

Beispiel 1

Die Dehydrocyanisierung wird in einem elektrisch beheizten Rohrreaktor aus Edelstahl durchgeführt, dessen Geometrie dem Formkörper Katalysator C angepaßt ist. Der Reaktor ist gefüllt mit 10 x 12 cm langen Wabenkörpern. Jeder Wabenkörper ist durch je einen 5 cm langen handelsüblichen statischen Mischer (Kerapak R) vom nächsten Wabenkörper getrennt. Dem Pyrolyserohr ist ein Dünnschichtverdampfer vorgeschaltet. Während der Reaktion werden eine Reaktionstemperatur von 460°C und ein Druck von 30 mbar aufrechterhalten. Die Belastung beträgt 0,8 kg Formylalaninnitril/kg Katalysator x h. Gleichzeitig werden 30 l Luft/h mitgeführt. Es wird ein Umsatz von 97 % und eine Selektivität von 93 % erzielt.

Beispiele 2 bis 6

Die Pyrolyse wird in einem Rohr aus Edelstahl durchgeführt, das einen Durchmesser von 53 mm und eine Länge von 1000 mm hat. Der Reaktor ist elektrisch beheizbar und wird jeweils mit den oben beschriebenen Katalysatoren A, B, D, E und F beschickt. Dem Pyrolyserohr ist ein Dünnschichtverdampfer vorgeschaltet, in dem bei allen Versuchen Formylalaninnitril bei einem Druck von 30 mbar verdampft wird. Die Pyrolysegase werden jeweils in zwei hintereinander angeordneten Kondensatoren abgekühlt, und zwar im 1. Kondensator auf eine Temperatur von 50°C und im 2. auf eine Temperatur von -5°C. Der nicht entfernte Cyanwasserstoff wird danach mit Natronlauge ausgewaschen. In der Tabelle sind die Reaktionsbedingungen sowie die Ergebnisse der Beispiele 2-6 angegeben, wobei Beispiel 2 den Stand der Technik repräsentiert.

Tabelle

| Beispiel | 2* | 3 | 4 | 5 | 6 |
|---|---|---|---|---|---|
| Katalysator | A | B | D | E | F |
| Temperatur [°C] | 460 | 460 | 460 | 450 | 480 |
| $WHSV^{-1}$ | 0,6 | 1,7 | 1,5 | 1,1 | 1,7 |
| Druck [mbar] | 30 | 30 | 30 | 30 | 30 |
| Umsatz | 92 % | 92 % | 96 % | 92,5 % | 95 % |
| Selektivität | 85 % | 94 % | 92 % | 93 % | 94 % |

WHSV = kg Formylalaninnitril/kg Katalysator und Std.

*) Beispiel 2 entspricht dem Stand der Technik

**Ansprüche**

1. Verfahren zur Herstellung von N-Alkenylcarbonsäureamiden durch Pyrolyse von Verbindungen der Formel

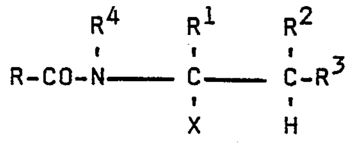 (I),

in der R = H, $C_1$-bis $C_4$-Alkyl,

$R^1$, $R^2$, $R^3$ = H, $C_1$-bis $C_4$-Alkyl, und außerdem

$R^1$ und $R^2$ bzw. $R^2$ und $R^3$ = 5 oder 6 C-Atome gesättigter, carbocyclischer Ring

$R^4$ = H, $C_1$-bis $C_4$-Alkyl und

X = $-CN$, $-OCH_3$, $-OC_2H_5$, $-OC_3H_7$, $-OC_4H_9$, 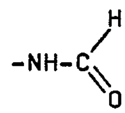 und 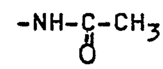

bedeutet, in Gegenwart von Feststoffen als Katalysator, dadurch gekennzeichnet, daß der Katalysator aus

(a) 30 bis 99 Gew.-% einer Eisenverbindung, berechnet als $Fe_2O_3$,

(b) 1 bis 70 Gew.-% einer Alkali-und/oder Erdalkaliverbindung, berechnet als Alkalimetall-bzw. Erdalkalimetalloxid, und gegebenenfalls

(c) bis zu 60 Gew.-% einer Aluminium-und/oder Chrom-und/oder Cer-Verbindung, berechnet als $Al_2O_3$ bzw. $Cr_2O_3$ bzw. $Ce_2O_3$,

(d) bis zu 20 Gew.-% eines Elements zur sechsten Nebengruppe des Perio-densystems, berechnet als $MeO_3$, sowie

(e) bis zu 20 Gew.-% einer Verbindung des Vanadins, berechnet als $V_2O_5$ und/oder einer Verbindung des Phosphors, berechnet als $P_2O_5$

aufgebaut ist.

2. Verfahren nach Anspruch 1, dadurch gekennzeichnet, daß man einen Vollkatalysator aus den Komponenten (a) bis (e) einsetzt.

3. Verfahren nach den Ansprüchen 1 und 2, dadurch gekennzeichnet, daß man den Katalysator in Wabenform einsetzt.

4. Verfahren nach den Ansprüchen 1 bis 3, dadurch gekennzeichnet, daß man das Gemenge der Ausgangsstoffe (a) bis (e) unter Anteigen mit Wasser, gegebenenfalls unter Zusatz eines Extrudierhilfsmittels, extrudiert, das Extrudat zu Formlingen zerkleinert, die Formlinge dann bei 80 bis 200°C trocknet und danach bei 400 bis 1000°C calciniert.

5. Verfahren nach den Ansprüchen 1 bis 3, dadurch gekennzeichnet, daß der Katalysator als Komponente (b) 2 bis 30 Gew.-% $Li_2O$ enthält.

6. Verfahren nach den Ansprüchen 1 bis 3, dadurch gekennzeichnet, daß der Katalysator als Komponente (b) eine Mischung aus 55 bis 95 Gew.-% $Li_2O$ und 45 bis 5 Gew.-% $K_2O$ enthält.

7. Verfahren nach den Ansprüchen 1 bis 6, dadurch gekennzeichnet, daß man Verbindungen der Formel

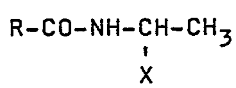 (II),

in der R = H, $C_1$-bis $C_4$-Alkyl und

X = CN, $-OCH_3$, 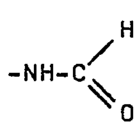 oder 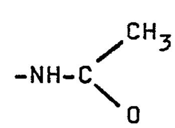

bedeutet, pyrolysiert.

8. Verfahren nach den Ansprüchen 1 bis 7, dadurch gekennzeichnet, daß man die Verbindung der Formel

$$H\text{-}CO\text{-}NH\text{-}\underset{\displaystyle CN}{CH}\text{-}CH_3 \qquad (III)$$

pyrolysiert.

Europäisches Patentamt

**EUROPÄISCHER RECHERCHENBERICHT**

Nummer der Anmeldung

EP 86 10 8176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 019 225 (HOECHST)<br>* Patentansprüche *<br>--- | 1 | C 07 C 102/08<br>C 07 C 103/365<br>B 01 J 23/88 |
| Y | EP-A-0 072 439 (BASF)<br>* Patentansprüche *<br>--- | 1-6 | |
| D,Y | DE-A-1 668 038 (BAYER)<br>* Patentansprüche *<br>----- | 1,7,8 | |

| RECHERCHIERTE SACHGEBIETE (Int. Cl.4) |
|---|
| C 07 C 102/00<br>C 07 C 103/00<br>B 01 J 23/00 |

Der vorliegende Recherchenbericht wurde für alle Patentansprüche erstellt.

| Recherchenort | Abschlußdatum der Recherche | Prüfer |
|---|---|---|
| DEN HAAG | 23-09-1986 | MOREAU J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82